# FASCICULE DE BREVET EUROPEEN

(11) **EP 3 804 280 B1**
(45) Date de publication et mention de la délivrance du brevet: **03.11.2021**
(21) Numéro de dépôt: 19725380.0
(22) Date de dépôt: 24.05.2019
(51) Int. Cl.: H04L 29/08, H04W 4/48, H04W 4/42, H05B 47/175, H04B 10/116, H04B 10/00, B64D 11/00, H05B 47/195, H05B 47/165, H04B 10/114, H04B 10/25, H04M 1/737

(54) **SYSTÈME DE COMMUNICATION PAR SIGNAUX DE TYPE LI-FI**
SYSTEM ZUR ÜBERTRAGUNG ÜBER SIGNALE VOM TYP LI-FI
SYSTEM FOR COMMUNICATING VIA SIGNALS OF LI-FI TYPE

(30) Priorité: 25.05.2018 FR 1854440
(43) Date de publication de la demande: 14.04.2021
(73) Titulaire: LATELEC, 31500 Toulouse (FR)
(72) Inventeur: DELAME, Cyrille, 31460 TOUTENS (FR); BERENGER, Serge, 75005 PARIS (FR); REBIERE, Yoann, 31520 RAMONVILLE (FR)
(74) Mandataire: Ipside
(86) Numéro de dépôt international: PCT/EP2019/063527
(87) Numéro de publication internationale: WO 2019/224377

(56) Documents cités:
- EP-A1- 2 768 162
- US-A1- 2012 275 795
- VIJAYALAKSHMI ANITHA ET AL: "New strategy in wireless communication: Li-Fi for delivery of broadband and media content in aircraft without intrusion", 2017 INTERNATIONAL CONFERENCE ON WIRELESS COMMUNICATIONS, SIGNAL PROCESSING AND NETWORKING (WISPNET), IEEE, 22 mars 2017 (2017-03-22), pages 1838-1840, XP033324327, DOI: 10.1109/WISPNET.2017.8300079
- YIN LIANG ET AL: "LiFi: transforming fibre into wireless", PROCEEDINGS OF SPIE, SPIE, 1000 20TH ST. BELLINGHAM WA 98225-6705 USA, vol. 10128, 28 janvier 2017 (2017-01-28), pages 1012802-1012802, XP060081988, ISSN: 0277-786X, DOI: 10.1117/12.2262047 ISBN: 978-1-5106-1533-5

## Description

### Domaine de l'invention

La présente invention s'inscrit dans le domaine des communications sans fil. L'invention porte préférentiellement sur un système de communication de données par signaux Li-Fi issus d'une source lumineuse infrarouge et/ou d'une source lumineuse visible. L'invention est notamment destinée à une application dans le domaine aéronautique, pour équiper un aéronef.

### Etat de la technique

Les cabines conventionnelles des aéronefs, notamment pour les avions grandes lignes, sont munies d'équipements, tels que des écrans, généralement placés au niveau des sièges passagers, pour offrir à chaque passager, un accès limité à des médias tels que les films.

Pour interconnecter les divers équipements présents de la cabine, un grand nombre de câblages doit être installé tout au long de la cabine dans des zones parfois peu accessibles, généralement disposées sous le plancher ou dans le plafond.

Le poids de ces câblages et de la connectique associée grève particulièrement le bilan de masse de l'avion.

De plus, lorsqu'une compagnie aérienne doit procéder à un réaménagement de la cabine de l'avion, tout ou partie de ces câblages doit être remplacé, induisant des temps de maintenance et des cycles d'immobilisation de l'avion importants.

Le remplacement de ces liaisons filaires par des liaisons sans fil, notamment via le protocole Wi-Fi (acronyme de Wireless Fidelity), a permis de résoudre les difficultés mentionnées.

Pour rappel, le Wi-Fi permet de créer un réseau local sans fil, sur un rayon de plusieurs dizaines de mètres, en utilisant les ondes radioélectriques du spectre électromagnétique.

Les liaisons sans fil de type Wi-Fi ont aussi permis de faire face au besoin croissant des passagers qui souhaitent également profiter de leurs appareils électroniques, tels que les téléphones, les tablettes, les ordinateurs portables.

Ce protocole de communication Wi-Fi présente cependant de nombreux inconvénients, connus par ailleurs dans leurs applications hors avioniques :
- l'utilisation du Wi-Fi peut causer des interférences avec d'autres appareils présents dans l'avion ;
- l'utilisation du Wi-Fi pose par ailleurs des problématiques sur la sécurité des communications, les ondes radioélectriques pouvant traverser les parois ; les signaux peuvent ainsi être interceptés et piratés,
- l'utilisation du Wi-Fi soulève également des questions de santé publique concernant les risques liés à une exposition prolongée à de tels rayonnements électromagnétiques.

Le document de brevet EP 2 768 162 A1 (TEAC AREOSPACE TECHNOLOGIES INC [US]) 20 août 2014 (2014-08-20) fait partie de l'état de l'art pertinent.

### Exposé de l'invention

La présente invention vise à remédier aux inconvénients précités. A cet effet, il est proposé par la présente invention un système de communication par signaux optiques modulés de type signaux Li-Fi (acronyme de Light Fidelity).
le Li-Fi est une technologie de communication sans fil basé sur l'utilisation de la lumière dans le domaine visible (longueur d'onde comprise entre 400nm et 780nm) ou le domaine infrarouge (longueur d'onde comprise entre 780nm et 2µm) comme vecteur d'informations.

Le principe du Li-Fi repose sur le codage et l'envoi de données via une modulation d'amplitude, de fréquence ou de phase d'une source lumineuse, selon un protocole standardisé.

Le système de communication selon l'invention permet la transmission de données vers et en provenance d'une pluralité d'espaces privilégiés déterminés.

Le système de communication est notamment destiné au domaine aéronautique, pour équiper un aéronef, mais peut également être destiné à tout autre domaine, tel que le domaine ferroviaire ou encore le domaine automobile, sans que cette liste soit exhaustive, pour équiper tout moyen de transport.

Le système de communication comporte :
- une pluralité de premières sources lumineuses, chaque première source lumineuse étant adaptée à émettre, dans l'infrarouge, un signal optique modulé de type signal Li-Fi, dit premier signal optique modulé,
- une pluralité de fibres optiques,
- une pluralité d'interfaces optiques, une interface optique en extrémité de chaque fibre optique,
chaque fibre optique étant adaptée à guider un premier signal optique modulé, provenant d'une seule desdites premières sources lumineuses, en direction d'une desdites interfaces optiques adaptée à diffuser ledit premier signal optique modulé dans un espace privilégié déterminé.

Chaque fibre optique est également adaptée à transporter un signal optique modulé de type signal Li-Fi provenant de l'espace privilégié déterminé associé, dit deuxième signal optique modulé, en direction d'un dispositif d'acquisition dudit deuxième signal optique modulé.

Le deuxième signal optique modulé est émis par une source lumineuse située dans un équipement disposé dans l'espace privilégié. De préférence, ladite source lumineuse émet dans l'infrarouge.

Un tel système de communication permet la création d'un espace privilégié délimité, et autorise une connexion à un réseau donné à un utilisateur situé uniquement dans cet espace privilégié. Toute tentative de connexion à ce réseau en dehors de l'espace privilégié est rendue impossible, grâce à l'utilisation de la technologie Li-Fi.

Un tel système de communication permet avantageusement une connexion, simultanée ou non, de tous les équipements (téléphone portable, tablette, écran fixe, ordinateur portable,...) disposés dans un espace privilégié, à un réseau donné.

Un tel système de communication, associant la technologie Li-Fi et la fibre optique pour sa capacité à distribuer des données, permet de s'affranchir des problèmes de complexité d'installation et de poids de câbles, mais également des contraintes liées à la sécurité des données, la pollution électromagnétique rencontrée avec le Wi-Fi et ses problèmes en termes de santé.

L'utilisation de la lumière infrarouge, invisible à l'œil humain, pour la distribution des données, via la technologie Li-Fi, au sein de l'espace privilégié permet de fournir à un utilisateur situé dans cet espace privilégié, une connexion, indépendamment de l'éclairage illuminant l'espace privilégié.

Un tel système de communication selon l'invention permet avantageusement de diffuser des données distinctes dans chaque espace privilégié. Il permet d'adresser à un utilisateur identifié dans un espace privilégié, des données spécifiques et adaptées audit utilisateur.

Selon des modes de mise en œuvre particuliers, le système de communication selon l'invention répond en outre aux caractéristiques suivantes, mises en œuvre séparément ou en chacune de leurs combinaisons techniquement opérantes.

Dans des modes de réalisation préférés de l'invention, pour réduire la consommation électrique ainsi que le coût, chaque première source lumineuse est une diode électroluminescente.

Dans d'autres modes de réalisation de l'invention, chaque première source lumineuse est un laser.

Dans des modes de réalisation particuliers de l'invention, le système de communication comporte une unique deuxième source lumineuse adaptée à émettre un signal optique dans le spectre visible, dit signal optique visible. Cette deuxième source lumineuse permet d'illuminer plusieurs espaces privilégiés. Chaque fibre optique est adaptée à transporter les signaux optiques provenant d'une seule desdites premières sources lumineuses et de la deuxième source lumineuse, en direction d'une desdites interfaces optiques.

Dans un tel mode de réalisation, la distribution de la lumière visible et des données, dans un espace privilégié s'effectue sur un support unique, la fibre optique. Cet agencement facilite l'installation et réduit davantage le poids du câblage.

L'utilisation de deux sources lumineuses distinctes, une émettant dans le domaine visible pour éclairer l'espace privilégié, l'autre pour distribuer les données, permet de fournir à un utilisateur situé dans l'espace privilégié, un accès aux données internet et/ou de divertissement lorsque la lumière est éteinte dans ledit espace privilégié.

Dans des exemples de réalisation particuliers de l'invention, la deuxième source lumineuse est adaptée à émettre un signal optique de lumière blanche.

Dans des modes préférés de réalisation, le système de communication comporte une pluralité de deuxièmes sources lumineuses, chaque deuxième source lumineuse étant adaptée à émettre un signal optique dans le spectre visible, dit signal optique visible. Chaque deuxième source lumineuse est destinée à l'éclairage d'un seul espace privilégié. Chaque fibre optique est adaptée à guider le premier signal optique provenant d'une seule desdites premières sources lumineuses et le signal optique visible provenant d'une seule desdites deuxièmes sources lumineuses, en direction d'une desdites interfaces optiques.

Suivant des modes de réalisation préférés, chaque deuxième source lumineuse est adapté à émettre un signal optique visible modulé. Le système de communication comporte en outre une pluralité de dispositif de commutation, un dispositif de commutation par espace privilégié. Chaque dispositif de commutation étant adapté pour :
- lorsqu'un espace privilégié est illuminé par une deuxième source lumineuse, désactiver la première source lumineuse,
- lorsqu'un espace privilégié n'est pas illuminé par une deuxième source lumineuse, activer la première source lumineuse.

Ainsi, lorsque l'espace privilégié est éclairé, la communication des données et l'éclairage est réalisée par une même deuxième source lumineuse. Lorsque l'espace privilégié n'est pas éclairé, la communication des données est réalisée uniquement par la première source lumineuse.

Selon des modes de réalisation préférés, chaque deuxième source lumineuse est une combinaison d'au moins deux diodes électroluminescentes, ou de lasers, adaptée à émettre chacune une température de couleur différente pour créer une lumière d'ambiance dans l'espace privilégié.

Selon des modes de réalisation préférés, la pluralité de premières sources lumineuses, la pluralité de deuxièmes sources lumineuses et la pluralité de dispositifs d'acquisition sont agencés dans une unité de transmission/réception de données.

Selon des modes de réalisation préférés, la pluralité de premières sources lumineuses et la pluralité de dispositifs d'acquisition sont agencés dans une unité de transmission/réception de données, et la pluralité de deuxièmes sources lumineuses sont agencées hors de ladite unité de transmission/réception de données.

Selon des modes particuliers de l'invention, le système de communication comportant un dispositif de commande de l'allumage/extinction du signal optique dans le spectre visible dans un espace privilégié.

L'invention est également relative à un aéronef comportant un système de communication tel que défini ci-dessus dans l'un de ses modes de réalisations.

Un tel système de communication agencé dans un aéronef permet, la création d'un espace privilégié autorisant une connexion d'un passager au réseau interne et/ou externe de l'aéronef uniquement dans son espace privilégié, par exemple un emplacement physique lié au siège pour le passager. Toute connexion extérieure à l'aéronef sur le réseau aéronef est rendu impossible, grâce à l'utilisation de la technologie Li-Fi.

Un tel système de communication agencé dans un aéronef permet avantageusement de distribuer des données internes et/ou externes à l'aéronef vers un ou plusieurs équipements multiples (téléphone portable, tablette, écran fixe, ordinateur portable,...) disposés dans un même espace privilégié.

Un tel système de communication, associant la technologie Li-Fi et la fibre optique pour sa capacité à distribuer des données, permet de s'affranchir des problèmes actuels de complexité d'installation et de poids de câblage dans l'aéronef mais également des contraintes liées à la sécurité des données, la pollution électromagnétique rencontrée avec le Wi-Fi.

Un tel système de communication agencé dans un aéronef permet avantageusement de diffuser des données distinctes dans chaque espace privilégié. Il permet d'adresser à un utilisateur (passager, personnel navigant commercial) identifié dans un espace privilégié, des données spécifiques et adaptées audit utilisateur. Il peut être par exemple envisagé d'informer un passager identifié sur sa prochaine correspondance, les éventuels retards... Il peut également être envisagé d'interdire la diffusion de données de divertissement au personnel navigant commercial.

### Présentation des figures

L'invention sera mieux comprise à la lecture de la description ci-après faite en référence aux dessins annexés :
La figure 1 illustre une représentation schématique d'une cabine d'aéronef intégrant une première configuration d'un système de communication,
La figure 2 illustre un exemple d'unité de transmission/réception de données du système de communication de la figure 1,
La figure 3 illustre une représentation schématique d'une cabine d'aéronef intégrant une variante de la première configuration du système de communication,
La figure 4 illustre une représentation schématique d'une cabine d'aéronef intégrant une deuxième configuration d'un système de communication,
La figure 5 illustre un exemple d'unité de transmission/réception de données du système de communication de la figure 4,
La figure 6 illustre un autre exemple d'unité de transmission/réception de données du système de communication de la figure 4,
La figure 7 illustre une représentation schématique d'une cabine d'aéronef intégrant une variante de la deuxième configuration du système de communication,
La figure 8 illustre un exemple d'unité de transmission/réception de données du système de communication de la figure 7.

### Description détaillée d'un mode de réalisation de l'invention

La présente invention concerne un système de communication de données.

Le système de communication peut, de manière générale, équiper tout moyen de transport, notamment ceux des domaines aéronautique, ferroviaire ou automobile, sans que cela soit restrictif de l'invention.

L'invention est décrite dans le contexte particulier d'un de ses domaines d'application préférés dans lequel le système de communication est disposé dans un avion de ligne civil. Rien n'exclut cependant de disposer le système de communication dans tout autre type d'aéronef, qu'il soit civil ou militaire. Ainsi, il peut être envisageable de disposer par exemple le système de communication dans un hélicoptère.

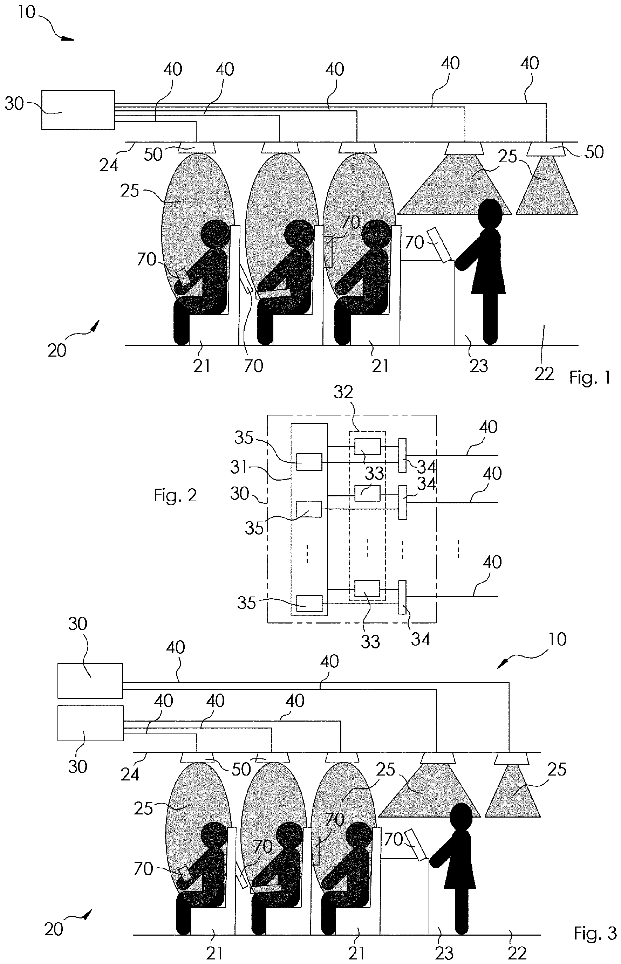

La figure 1 illustre de manière schématique l'intérieur d'une cabine 20 d'avion dans laquelle un système de communication 10 selon une première configuration de l'invention est déployé. La cabine 20 comporte, de manière classique, une pluralité de sièges 21, notamment pour recevoir les passagers, des couloirs 22 pour le passage des passagers et du personnel navigant commercial, et des espaces cuisine 23.

Dans la suite de la description, on utilisera l'acronyme PNC pour désigner le personnel navigant commercial.

Dans l'exemple de la figure 1, sont représentés trois sièges passagers 21, un espace cuisine 23 et un couloir 22.

Le système de communication 10 selon l'invention est adapté à communiquer avec des équipements 70 soit embarqués par les passagers, tels que par exemple une tablette, un téléphone ou encore un ordinateur portable, soit présents à bord de l'avion, tels que des écrans intégrés dans les sièges 21 de l'avion.

Le système de communication 10 selon l'invention permet avantageusement aux passagers et aux membres du PNC d'avoir un accès à des données de divertissement ou des données internet, quelque soit l'équipement 70 utilisé, dans des espaces privilégiés 25 déterminés.

Par espace privilégié 25, on entend un espace de connexion unique et personnel permettant à un passager ou à un membre du PNC de recevoir et/ou d'envoyer des données internes et/ou externe à l'avion de façon sécurisée et personnalisée dans un emplacement physique prédéterminé.

Dans un exemple particulier de réalisation, un espace privilégié 25 peut correspondre à un espace délimité à un siège 21, pour un passager. Ainsi, chaque passager, lorsqu'il est assis sur son siège 21, bénéficie d'un espace de connexion unique et personnel pour recevoir et transmettre des données de manière confidentielle. D'autres espaces privilégiés peuvent permettre de couvrir des parties de couloir 22 ou un espace cuisine 23, principalement pour le PNC.

Le système de communication 10 comporte préférentiellement, comme illustré figure 1 :
- une unité 30 de transmission/réception de données,
- une pluralité de fibres optiques 40, en sortie de l'unité 30 de transmission/réception de données,
- une pluralité d'interfaces optiques 50, une interface optique 50 en extrémité de chaque fibre optique 40.

L'unité 30 de transmission/réception de données comporte, comme illustré sur la figure 2, une unité de commande 31 adaptée à convertir un signal numérique, porteur des informations de données à transmettre, en un signal optique modulé. Le signal optique modulé est de type Li-Fi.

Ce signal numérique provient par exemple des unités centrales de traitement des systèmes multimédias de bord (IFE), des systèmes cabine.

L'unité 30 de transmission/réception de données comporte en outre une pluralité de premières sources lumineuses 33.

Chaque première source lumineuse 33 reçoit une instruction provenant de l'unité de commande 31 et est commandée pour l'émission d'un signal optique modulé, dit premier signal optique modulé. Il est bien clair que le premier signal optique modulé est de type Li-Fi.

Dans un exemple non limitatif de réalisation, cette modulation du signal optique est obtenue en commandant l'intensité de la première source lumineuse 33 de façon variable à très haute fréquence.

Chaque première source lumineuse 33 est avantageusement adaptée à émettre dans le domaine infrarouge.

Dans un exemple préféré de réalisation, chaque première source lumineuse 33 est une diode électroluminescente (DEL).

Dans un autre exemple de réalisation, chaque première source lumineuse 33 est un laser.

L'ensemble des premières sources lumineuses 33 forme de préférence un premier module d'émission 32.

L'unité 30 de transmission/réception de données comporte en outre une pluralité de modules optiques 34.

Un module optique 34 est adapté à coupler un premier signal optique modulé provenant d'une première source lumineuse 33 dans une fibre optique 40.

On comprend ici qu'il y a autant de fibres optiques 40 et de modules optiques 34 que de premières sources lumineuses 33.

Une fibre optique 40 est adaptée pour transporter un premier signal optique issu d'une première source lumineuse 33 vers une interface optique 50.

Une interface optique 50, de part ses caractéristiques géométriques, permet de confiner un premier signal optique modulé, émis par une première source lumineuse 33, dans un cône de diffusion restreint définissant le volume d'un espace privilégié 25.

Le nombre de premières sources lumineuses 33, par extension le nombre de modules optiques 34, de fibres optiques 40 et d'interfaces optiques 50 associés, correspond avantageusement au nombre d'espaces privilégiés 25 qu'il est souhaité à bord de l'avion.

Dans l'exemple non limitatif de réalisation illustré sur la figure 1, le système de communication 10 est destiné à transmettre des données vers et en provenance de cinq espaces privilégiés 25. Ce système de communication 10 comporte :
- une unité 30 de transmission/réception des données comportant cinq premières sources lumineuses (non représentées),
- cinq fibres optiques 40 en sortie de l'unité 30 de transmission/réception des données, chaque fibre optique 40 étant reliée à une première source lumineuse 33,
- cinq interfaces optiques 50, une interface optique 50 en sortie de chaque fibre optique 40 ; trois interfaces optiques 50 disposées chacune au niveau d'un siège passager 21, une interface optique 50 disposée au niveau du couloir 22 et une interface optique 50 disposée au niveau de l'espace cuisine 23. Chaque interface optique 50 diffuse un premier signal optique modulé dans un espace privilégié 25.

Les fibres optiques 40 sont préférentiellement déployées dans une partie supérieure de l'avion, comme illustré sur la figure 1.

Les interfaces optiques 50 sont préférentiellement disposées dans un plafond 24 de l'avion, par exemple au dessus de chaque siège 21, à proximité des aérateurs individuels.

L'unité 30 de transmission/réception des données est quant à elle préférentiellement délocalisée, par exemple dans une partie de l'avion regroupant tout ou partie des équipements électroniques et électriques nécessaires au fonctionnement de l'avion.

Dans un exemple préféré de réalisation de fibre optique, la fibre optique 40 est une fibre optique en verre. Une telle fibre optique permet de transporter un signal optique, avec une atténuation limitée.

Dans d'autres exemples non limitatifs de réalisation de fibre optique, ladite fibre optique peut être une fibre en plastique ou une fibre de verre enrobée de plastique, telle qu'une fibre PCF (acronyme pour « Polymer Cladded Fiber »), une fibre PCS (acronyme pour « Plastic Cladded Silica »), une fibre HCS (acronyme pour « Hard-Clad Silica ») ou encore une fibre HPCF (acronyme pour « Hard Polymer Cladded Fiber »).

L'interface optique 50 est avantageusement une interface optique passive, c'est-à-dire une interface optique non alimentée électriquement.

Dans un exemple de réalisation d'interface optique, l'interface optique 50 comporte une lentille ou un système de lentilles.

Dans une forme de réalisation d'interface optique, l'interface optique 50 est une lentille.

Dans un mode de réalisation, l'interface optique 50 est installée, par exemple au plafond, avec au moins un degré de rotation, de sorte que le passager et/ou le personnel navigant commercial puisse l'orienter, et conséquence orienter le positionnement de l'espace privilégié, selon ses souhaits, dans la limite de ne pas recouvrir l'espace privilégié le plus proche.

On peut facilement assimiler l'unité 30 de transmission/réception à un point d'accès dit Li-Fi, configurée pour générer et transmettre des signaux de type Li-Fi. Les fibres optiques 40 et les interfaces optiques 50 sont des éléments optiques avantageusement destinés à, respectivement, transporter ces signaux de type Li-Fi et les diffuser dans des espaces privilégiés.

Afin de réaliser la communication de données internet et/ou divertissement de l'unité 30 de transmission/réception de données vers un équipement 70 dans un espace privilégié, ledit équipement doit comporter de préférence un module d'acquisition du premier signal optique modulé (non représenté). Ledit module d'acquisition est adapté à détecter les variations d'intensité du premier signal optique modulé émis par la première source lumineuse 33, et diffusé par l'interface optique 50. Le module d'acquisition de l'équipement 70 convertit les données de variations d'intensité du signal optique en un signal numérique. Ce signal numérique est ensuite traité et traduit en une information exploitable par ledit équipement.

Dans un exemple de réalisation, le module d'acquisition de l'équipement est une photodiode.

Pour établir une communication bidirectionnelle de données entre le système de communication 10 et un équipement 70 dans un espace privilégié, et permettre de manière réciproque de transmettre des données depuis ledit équipement, le système de communication 10 comporte un dispositif d'acquisition 35 d'un signal optique modulé, de préférence placé dans l'unité de commande 31.

Ainsi, pour permettre la communication des données de façon bidirectionnelle par espace privilégié, l'unité de commande 31, dans le sens de communication descendante, est adaptée à convertir un signal numérique en un signal optique modulé et, dans le sens de communication montante, est adaptée à convertir un signal optique modulé en un signal numérique.

Par « dans le sens de communication descendante », on entend que le système de communication 10 fonctionne en transmission de données vers un équipement 70.

Par « dans le sens de communication montante », on entend que le système de communication 10 fonctionne en réception de données issues d'un équipement 70.

Dans un exemple de réalisation de dispositif d'acquisition, le dispositif d'acquisition du système de communication 10 est une photodiode 35.

De préférence, le système de communication 10 comporte autant de dispositifs d'acquisition 35 qu'il y a de premières sources lumineuses 33.

Ainsi, pour chaque espace privilégié 25 qu'il est souhaité dans l'avion, on associe une première source lumineuse 33, un dispositif d'acquisition 35, une fibre optique 40 et une interface optique 50.

Chaque dispositif d'acquisition 35 est adapté à détecter des variations d'intensité d'un signal optique modulé, dit deuxième signal optique modulé, émis par un équipement 70, situé dans l'espace privilégié 25, muni d'une source lumineuse (non représentée). Il est bien clair que le deuxième signal optique modulé est de type Li-Fi. De préférence la source lumineuse de l'équipement 70 émet dans le domaine infrarouge.

Dans un exemple non limitatif de réalisation de cette source lumineuse, ladite source lumineuse de l'équipement 70 est une diode électroluminescente ou un laser.

La source lumineuse de l'équipement 70 est adaptée à émettre le deuxième signal optique modulé en fonction de l'information à communiquer à l'unité 30 de transmission/réception de données.

La première source lumineuse 33 de l'unité 30 de transmission/réception des données et la source lumineuse de l'équipement 70 émettent préférentiellement à une longueur d'onde différente dans le domaine infrarouge.

Le deuxième signal optique modulé issu de l'équipement 70 traverse une interface optique 50, est transporté par une fibre optique 40 vers l'unité 30 de transmission/réception des données, puis dirigé, via un module optique 34, vers un dispositif d'acquisition35 du système de communication 10.

Chaque fibre optique 40 permet avantageusement le transport d'un signal optique modulé dans le sens de communication descendante (premier signal optique modulé) et dans celui de communication montante (deuxième signal optique modulé).

Chaque module optique 34, outre le fait de coupler le premier signal optique modulé provenant d'une première source lumineuse 33 sur une fibre optique 40, est avantageusement adapté pour dissocier les longueurs d'ondes spécifiques à chaque signal optique modulé vers/en provenance de la fibre optique 50 (c'est-à-dire la longueur d'onde du premier signal optique modulé infrarouge, dans le sens de la communication descendante, et la longueur d'onde du deuxième signal optique modulé infrarouge, dans le sens de la communication montante).

Dans une variante de cette première configuration du système de communication 10, illustrée figure 3, ledit système peut comporter plusieurs unités 30 de transmission/réception de données.

Une telle variante peut s'envisager, par exemple pour un avion comportant un nombre de sièges 21 pour les passagers et un nombre de zones à couvrir pour le PNC relativement importants, tel qu'un avion long courrier.

Le nombre d'unités 30 de transmission/réception de données peut varier selon le nombre de sièges 21, le nombre de zones à couvrir pour le PNC, le nombre de fibres optiques 40 en sortie, ou encore les performances de débit dont l'utilisateur (passager ou membre de PNC) a besoin.

Dans l'exemple non limitatif de la figure 3, le système de communication 10 est destiné à transmettre des données vers et en provenance de cinq espaces privilégiés 25. Il comporte deux unités 30 de transmission/réception de données, une première unité 30 de transmission/réception de données pour desservir trois espaces privilégiés (trois sièges passagers), une deuxième unité 30 de transmission/réception de données pour desservir deux espaces privilégiés (un espace cuisine 23 et une partie de couloir 22). La première unité 30 de transmission/réception de données comporte trois premières sources lumineuses 33. Chaque première source lumineuse 33 est reliée, via une fibre optique 40, à une interface optique 50 disposée au niveau d'un siège 21 passager. La deuxième unité 30 de transmission/réception de données comporte deux premières sources lumineuses 33. Une première source lumineuse 33 est reliée, via une fibre optique 40, à une interface optique 50 disposée au niveau d'une partie du couloir 22. Une autre première source lumineuse 33 est reliée, via une fibre optique 40, à une interface optique 50 disposée au niveau de l'espace cuisine 23.

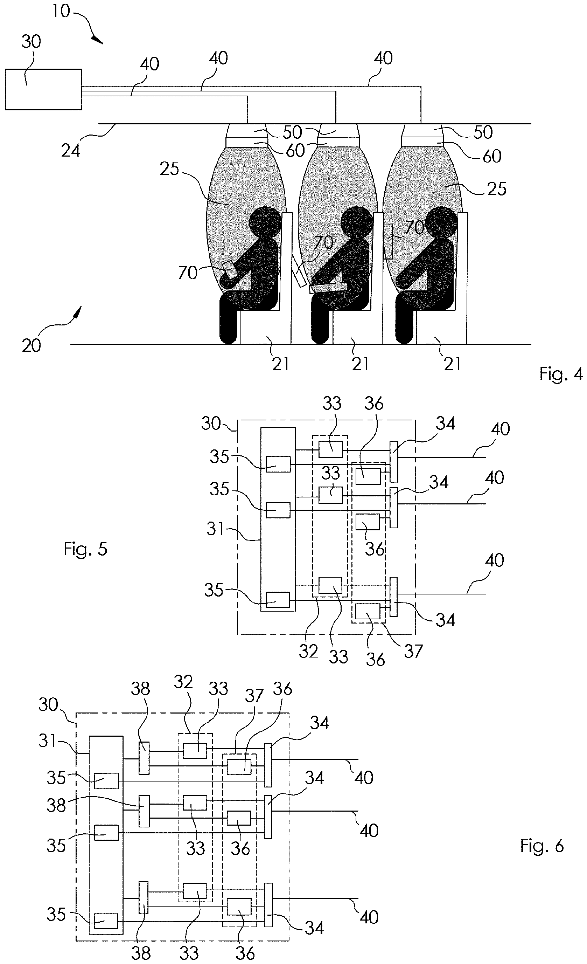

Dans une deuxième configuration du système de communication 10, illustrée sur les figures 4 et 5, ledit système de communication 10 est adapté, outre la transmission/réception de données, à transmettre de la lumière visible dans les espaces privilégiés 25.

Pour cette deuxième configuration, l'unité 30 de transmission/réception de données comporte une pluralité de deuxièmes sources lumineuses 36.

Chaque deuxième source lumineuse 36 est adaptée à émettre un signal optique dans le domaine visible, de préférence, un signal optique de lumière blanche. Ce signal optique sera désigné par la suite signal optique visible.

Chaque deuxième source lumineuse 36 est par exemple une diode électroluminescente, un laser, une combinaison de diodes électroluminescentes ou une combinaison de lasers.

Dans un mode de réalisation préféré, une deuxième source lumineuse est une combinaison d'au moins deux diodes électroluminescentes visibles (ou une combinaison de lasers), émettant chacune une température de couleur différente pour créer une lumière d'ambiance à destination de l'espace privilégie 25 associé à cette deuxième source lumineuse.

L'unité 30 de transmission/réception de données comporte préférentiellement autant de deuxièmes sources lumineuses 36 que de premières sources lumineuses 33. Chaque deuxième source lumineuse 36 est configurée pour émettre un signal optique visible dans un seul espace privilégié 25.

L'ensemble des deuxièmes sources lumineuses forme de préférence un deuxième module d'émission 37.

Dans un exemple de réalisation, illustré sur la figure 5, le deuxième module d'émission 37 est disposé dans l'unité 30 de transmission/réception de données.

Dans cette deuxième configuration, chaque module optique 34 est adapté à coupler le premier signal optique modulé issu d'une première source lumineuse 33 et le signal optique visible issu d'une deuxième source lumineuse 36 dans une seule fibre optique 40.

Chaque module optique 34 est également adapté à combiner et/ou dissocier les longueurs d'ondes spécifiques à chaque signal optique vers/en provenance de la fibre optique 40 (c'est-à-dire la longueur d'onde du signal optique visible, la longueur d'onde du premier signal optique modulé infrarouge, dans le sens de la communication descendante, et la longueur d'onde du deuxième signal optique modulé infrarouge, dans le sens de la communication montante).

Dans un exemple de réalisation, le module optique 34 comporte un multiplexeur et un démultiplexeur.

Chaque fibre optique 40 est également adaptée pour transporter à la fois le signal optique visible et les premier et deuxième signaux optiques modulés infrarouges.

Dans un mode de réalisation, le système de communication 10 comporte un dispositif de commande 60 de l'allumage/extinction du signal optique visible dans un espace privilégié 25, accessible au passager, pour lui permettre d'allumer ou d'éteindre la lumière visible, sans impacter la communication des données.

Dans un exemple de réalisation, le dispositif de commande 60 est un bouton poussoir disposé à proximité de l'interface optique 50.

Le système de communication 10, dans cette deuxième configuration, permet ainsi de dissocier avantageusement la fonction de distribution de la lumière de la distribution des données.

Ainsi, le système de communication 10 permet avantageusement de distribuer des données, même lorsque la lumière visible est éteinte.

Dans une variante de réalisation (non illustrée) de la deuxième configuration du système de communication, l'unité 30 de transmission/réception de données comporte une deuxième source lumineuse 36 de puissance suffisante pour émettre un signal optique visible pour plusieurs espaces privilégiés 25, voir une unique deuxième source lumineuse 36 de puissance suffisante pour émettre un signal optique visible dans l'ensemble des espaces privilégiés 25 desservis par l'unité 30 de transmission/réception des données.

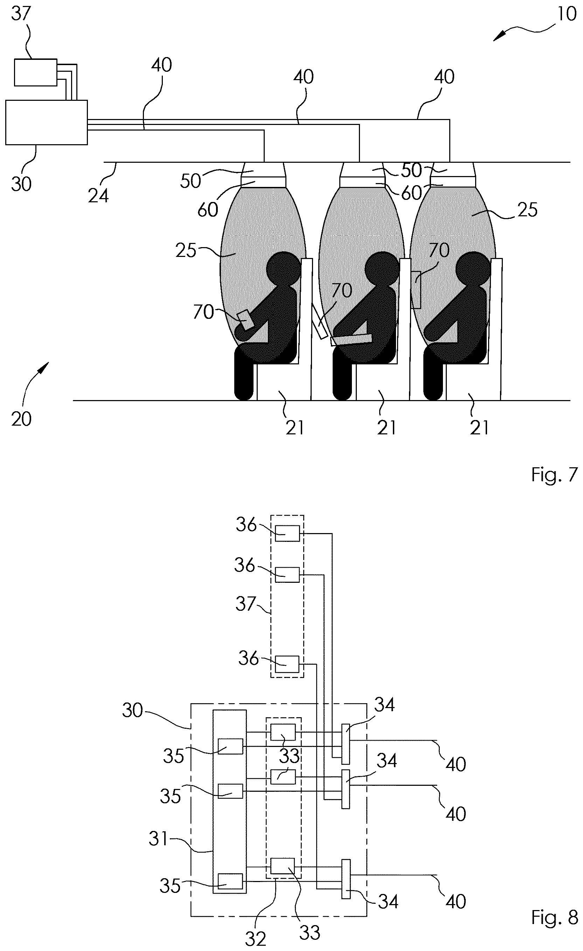

Dans une autre variante de réalisation de la deuxième configuration du système de communication, comme illustrée figures 7 et 8, le deuxième module d'émission 37 est disposé hors de l'unité 30 de transmission/réception de données. Un tel agencement permet avantageusement de dissocier physiquement les différentes fonctions du système de communication :
- l'unité 30 de transmission/réception de données permet la distribution des données vers l'espace privilégié,
- le deuxième module d'émission 37 permet la génération de l'éclairage dans l'espace privilégié.

Dans une autre variante de réalisation de la deuxième configuration du système de communication, comme illustrée figure 6, le système de communication est configuré pour permettre la communication des données via la lumière visible ou infrarouge. Dans cette variante, les deuxièmes sources lumineuses 36 sont donc adaptées pour émettre un signal optique modulé pour transmettre les données. Il est bien clair que le signal optique modulé est de type Li-Fi.

Dans cette variante, le système de communication comporte en outre une pluralité de dispositifs de commutation 38.

Préférentiellement, la pluralité de dispositifs de commutation 38 sont disposés dans l'unité 30 de transmission/réception de données, entre d'une part, l'unité de commande 31, et d'autre part les premières sources lumineuses 33 et les deuxièmes sources lumineuses 36.

On comprend qu'il y a autant de dispositifs de commutation 38 que de premières sources lumineuses 33 et de deuxièmes sources lumineuses 36.

Un dispositif de commutation 38 est préférentiellement configuré pour :
- lorsqu'un espace privilégié associé est éclairé par une deuxième source lumineuse, désactiver la première source lumineuse de telle sorte que la communication des données est réalisée uniquement par la deuxième source lumineuse,
- lorsqu'un espace privilégié associé n'est pas éclairé par une deuxième source lumineuse, activer la première source lumineuse de telle sorte que la communication des données est réalisée uniquement par la première source lumineuse.

En d'autres termes, lorsqu'une deuxième source lumineuse est inactive (i.e. l'espace privilégié n'est pas éclairé), la première source lumineuse 33 reçoit une instruction provenant de l'unité de commande et est commandée pour émettre un premier signal optique modulé infrarouge contenant les données à transmettre. Lorsqu'une deuxième source lumineuse est active (i.e. l'espace privilégié est éclairé), la première source lumineuse 33 ne reçoit aucune instruction de l'unité de commande. La deuxième source lumineuse reçoit une instruction provenant de l'unité de commande et est commandée pour émettre un signal optique visible modulé contenant les données à transmettre.

Une telle variante permet avantageusement de réduire la consommation électrique du système de communication 10 pour transmettre les données en utilisant uniquement, soit :
- une deuxième source lumineuse 36, lorsque l'espace privilégié 25 est éclairé par ladite deuxième source lumineuse ; on associe les fonctions de distribution de lumière et de données ;
- une première source lumineuse 32, lorsque l'espace privilégié 25 n'est pas éclairé ; on dissocie la fonction de distribution de lumière de celle de distribution de données ; les données sont distribuées, même lorsque la lumière est éteinte.

Bien que l'invention ait été décrite dans le cas d'une communication bidirectionnelle de données entre le système de communication et un seul équipement dans un espace privilégié, il est clair que le système de communication de l'invention peut établir une communication bidirectionnelle avec plusieurs équipements se trouvant dans un même espace privilégié, simultanément ou non, sous réserve que chaque équipement comporte une source lumineuse et un module d'acquisition tels que précédemment décrits.

## Revendications

1. Système de communication (10) par signaux optiques modulés de type signaux Li-Fi, pour la transmission de données vers et en provenance d'une pluralité d'espaces privilégiés (25) déterminés, le système de communication (10) comportant :
- une pluralité de premières sources lumineuses (33), chaque première source lumineuse (33) étant adaptée à émettre, dans l'infrarouge, un signal optique modulé de type signal Li-Fi, dit premier signal optique modulé,
- une pluralité de fibres optiques (40),
- une pluralité d'interfaces optiques (50), une interface optique en extrémité de chaque fibre optique (40),
chaque fibre optique (40) étant adaptée à guider un desdits premiers signaux optiques modulés, provenant d'une seule desdites premières sources lumineuses (33), en direction d'une desdites interfaces optiques (50) adaptée à diffuser ledit un desdits premiers signaux optiques modulés dans un espace privilégié (25) déterminé,
chaque fibre optique (40) étant également adaptée à transporter un signal optique modulé de type signal Li-Fi provenant de l'espace privilégié (25) déterminé associé, dit deuxième signal optique modulé, en direction d'un dispositif d'acquisition (35) dudit deuxième signal optique modulé.

2. Système de communication (10) selon la revendication 1 comportant une unique deuxième source lumineuse (36) adaptée à émettre un signal optique dans le spectre visible, dit signal optique visible, pour illuminer plusieurs espaces privilégiés, chaque fibre optique (40) étant adaptée à guider le premier signal optique modulé provenant d'une seule desdites premières sources lumineuses (33) et le signal optique visible provenant de la deuxième source lumineuse (36), en direction d'une desdites interfaces optiques (50).

3. Système de communication (10) selon la revendication 1 comportant une pluralité de deuxièmes sources lumineuses (36), chaque deuxième source lumineuse (36), étant adaptée à émettre un signal optique dans le spectre visible, dit signal optique visible, pour illuminer un seul espace privilégié, chaque fibre optique (40) étant adaptée à guider le premier signal optique modulé provenant d'une seule desdites premières sources lumineuses (33) et le signal optique visible provenant d'une seule desdites deuxièmes sources lumineuses (36), en direction d'une desdites interfaces optiques (50).

4. Système de communication (10) selon la revendication 3 dans lequel chaque deuxième source lumineuse (36) est adaptée à émettre un signal optique visible modulé, ledit système de communication comportant une pluralité de dispositifs de commutation (38), un dispositif de commutation par espace privilégié (25), chaque dispositif de commutation (38) étant adapté pour :
- lorsqu'un espace privilégié est illuminé par une deuxième source lumineuse (36), désactiver la première source lumineuse (33),
- lorsqu'un espace privilégié n'est pas illuminé par une deuxième source lumineuse (36), activer la première source lumineuse (33).

5. Système de communication (10) selon l'une des revendications 3 ou 4 dans lequel chaque deuxième source lumineuse (36) est une combinaison d'au moins deux diodes électroluminescentes, ou de lasers, adaptée à émettre chacune une température de couleur différente pour créer une lumière d'ambiance dans l'espace privilégié (25).

6. Système de communication (10) selon l'une des revendications 3 à 5 dans lequel la pluralité de premières sources lumineuses (33), la pluralité de deuxièmes sources lumineuses (36) et la pluralité de dispositifs d'acquisition (35) sont agencés dans une unité (30) de transmission/réception de données.

7. Système de communication (10) selon l'une des revendications 3 à 5 dans lequel la pluralité de premières sources lumineuses (33) et la pluralité de dispositifs d'acquisition (35) sont agencés dans une unité (30) de transmission/réception de données, et la pluralité de deuxièmes sources lumineuses (36) sont agencées hors de ladite unité (30) de transmission/réception de données.

8. Système de communication (10) selon l'une des revendications 2 à 7 comportant un dispositif de commande (60) de l'allumage/extinction du signal optique dans le spectre visible dans un espace privilégié (25).

9. Aéronef comportant un système de communication (10) selon l'une des revendications 1 à 8.

## Patentansprüche

1. System zur Kommunikation (10) über modulierte optische Signale vom Typ Li-Fi-Signale für die Übertragung von Daten zu und von einer Vielzahl von bestimmten privilegierten Räumen (25), wobei das Kommunikationssystem (10) umfasst:
- eine Vielzahl von ersten Lichtquellen (33), wobei jede erste Lichtquelle (33) geeignet ist, ein als erstes moduliertes optisches Signal bezeichnetes moduliertes optisches Signal vom Typ Li-Fi-Signal im Infrarotbereich zu emittieren,
- eine Vielzahl von optischen Fasern (40),
- eine Vielzahl von optischen Schnittstellen (50), eine optische Schnittstelle am Ende jeder optischen Faser (40),
wobei jede optische Faser (40) geeignet ist, eines der ersten modulierten optischen Signale von einer einzigen der ersten Lichtquellen (33) in Richtung einer der optischen Schnittstellen (50) zu leiten, die geeignet ist, das eine der ersten modulierten optischen Signale in einem bestimmten privilegierten Raum (25) zu verbreiten,
wobei jede optische Faser (40) ebenfalls geeignet ist, ein als zweites moduliertes optisches Signal bezeichnetes moduliertes optisches Signal vom Typ Li-Fi-Signal von dem zugehörigen bestimmten privilegierten Raum (25) in Richtung einer Vorrichtung zur Erfassung (35) des zweiten modulierten optischen Signals zu transportieren.

2. Kommunikationssystem (10) nach Anspruch 1, das eine einzige zweite Lichtquelle (36) umfasst, die geeignet ist, ein als sichtbares optisches Signal bezeichnetes optisches Signal im sichtbaren Spektrum zu emittieren, um mehrere privilegierte Räume zu beleuchten, wobei jede optische Faser (40) geeignet ist, das erste modulierte optische Signal von einer einzigen der ersten Lichtquellen (33) und das sichtbare optische Signal von der zweiten Lichtquelle (36) in Richtung einer der optischen Schnittstellen (50) zu leiten.

3. Kommunikationssystem (10) nach Anspruch 1, das eine Vielzahl von zweiten Lichtquellen (36) umfasst, wobei jede zweite Lichtquelle (36) geeignet ist, ein als sichtbares optisches Signal bezeichnetes optisches Signal im sichtbaren Spektrum zu emittieren, um einen einzigen privilegierten Raum zu beleuchten, wobei jede optische Faser (40) geeignet ist, das erste modulierte optische Signal von einer einzigen der ersten Lichtquellen (33) und das sichtbare optische Signal von einer einzigen der zweiten Lichtquellen (36) in Richtung einer der optischen Schnittstellen (50) zu leiten.

4. Kommunikationssystem (10) nach Anspruch 3, wobei jede zweite Lichtquelle (36) geeignet ist, ein moduliertes sichtbares optisches Signal zu emittieren, wobei das Kommunikationssystem eine Vielzahl von Schaltvorrichtungen (38) umfasst, eine Schaltvorrichtung pro privilegiertem Raum (25), wobei jede Schaltvorrichtung (38) geeignet ist:
- die erste Lichtquelle (33) zu deaktivieren, wenn ein privilegierter Raum von einer zweiten Lichtquelle (36) beleuchtet wird,
- die erste Lichtquelle (33) zu aktivieren, wenn ein privilegierter Raum von keiner zweiten Lichtquelle (36) beleuchtet wird.

5. Kommunikationssystem (10) nach einem der Ansprüche 3 oder 4, wobei es sich bei jeder zweiten Lichtquelle (36) um eine Kombination von mindestens zwei Leuchtdioden oder Lasern handelt, die geeignet ist, jeweils eine unterschiedliche Farbtemperatur zu emittieren, um ein Umgebungslicht in dem privilegierten Raum (25) zu erzeugen.

6. Kommunikationssystem (10) nach einem der Ansprüche 3 bis 5, wobei die Vielzahl von ersten Lichtquellen (33), die Vielzahl von zweiten Lichtquellen (36) und die Vielzahl von Erfassungsvorrichtungen (35) in einer Datenübertragungs-/empfangseinheit (30) eingerichtet sind.

7. Kommunikationssystem (10) nach einem der Ansprüche 3 bis 5, wobei die Vielzahl von ersten Lichtquellen (33) und die Vielzahl von Erfassungsvorrichtungen (35) in einer Datenübertragungs-/empfangseinheit (30) eingerichtet sind, und die Vielzahl von zweiten Lichtquellen (36) außerhalb der Datenübertragungs-/empfangseinheit (30) eingerichtet sind.

8. Kommunikationssystem (10) nach einem der Ansprüche 2 bis 7, das eine Steuervorrichtung (60) zum Einschalten/Ausschalten des optischen Signals im sichtbaren Spektrum in einem privilegierten Raum (25) umfasst.

9. Flugzeug, das ein Kommunikationssystem (10) nach einem der Ansprüche 1 bis 8 umfasst.

## Claims

1. Communication system (10) by modulated optical signals of Li-Fi signal type, for the transmission of data to and from a plurality of defined privileged spaces (25), the communication system (10) comprising:
- a plurality of first light sources (33), each first light source (33) being adapted to emit, in the infrared, a modulated optical signal of the Li-Fi signal type, called first modulated optical signal,
- a plurality of optical fibres (40),
- a plurality of optical interfaces (50), one optical interface at an end of each optical fibre (40),
each optical fibre (40) being adapted to guide one of said first modulated optical signals, coming from only one of said first light sources (33), in the direction of one of said optical interfaces (50) adapted to broadcast said one of said first modulated optical signals into a defined privileged space (25),
each optical fibre (40) also being adapted to transport a modulated optical signal of the Li-Fi signal type coming from the associated defined privileged space (25), called second modulated optical signal, in the direction of a device (35) for acquiring said second modulated optical signal.

2. Communication system (10) according to claim 1 comprising a single second light source (36) adapted to emit an optical signal in the visible spectrum, called visible optical signal, to illuminate several privileged spaces, each optical fibre (40) being adapted to guide the first modulated optical signal coming from only one of said first light sources (33) and the visible optical signal coming from the second light source (36), in the direction of one of said optical interfaces (50).

3. Communication system (10) according to claim 1 comprising a plurality of second light sources (36), each second light source (36), being adapted to emit an optical signal in the visible spectrum, called visible optical signal, to illuminate a single privileged space, each optical fibre (40) being adapted to guide the first modulated optical signal coming from only one of said first light sources (33) and the visible optical signal coming from only one of said second light sources (36), in the direction of one of said optical interfaces (50).

4. Communication system (10) according to claim 3 wherein each second light source (36) is adapted to emit a modulated visible optical signal, said communication system comprising a plurality of switching devices (38), one switching device per privileged space (25), each switching device (38) being adapted:
- when a privileged space is illuminated by a second light source (36), to deactivate the first light source (33),
- when a privileged space is not illuminated by a second light source (36), to activate the first light source (33).

5. Communication system (10) according to one of claims 3 or 4 wherein each second light source (36) is a combination of at least two light-emitting diodes, or lasers, each adapted to emit a different colour temperature to create mood light in the privileged space (25).

6. Communication system (10) according to one of claims 3 to 5 wherein the plurality of first light sources (33), the plurality of second light sources (36) and the plurality of acquisition devices (35) are arranged in a data transmission/reception unit (30).

7. Communication system (10) according to one of claims 3 to 5 wherein the plurality of first light sources (33) and the plurality of acquisition devices (35) are arranged in a data transmission/reception unit (30), and the plurality of second light sources (36) are arranged outside said data transmission/reception unit (30).

8. Communication system (10) according to one of claims 2 to 7 comprising a device (60) for controlling the turning on/off of the optical signal in the visible spectrum in a privileged space (25).

9. Aircraft comprising a communication system (10) according to one of claims 1 to 8.
